# EUROPÄISCHE PATENTSCHRIFT

(11) **EP 0 888 998 B1**
(45) Veröffentlichungstag und Bekanntmachung des Hinweises auf die Patenterteilung: **16.07.2003**
(21) Anmeldenummer: 98890170.8
(22) Anmeldetag: 04.06.1998
(51) Int. Cl.: B66C 23/74, B66C 23/50

(54) **Maschine mit einem drehbar gelagerten Auslegerkran**
Machine with a slewable jib crane
Machine avec une grue à flèche orientable

(30) Priorität: 02.07.1997 AT 113897
(43) Veröffentlichungstag der Anmeldung: 07.01.1999
(73) Patentinhaber: Franz Plasser Bahnbaumaschinen- Industriegesellschaft m.b.H., 1010 Wien (AT)
(72) Erfinder: Theurer, Josef, 1010 Wien (AT); Gruber, Leopold Rudolf, 3270 Scheibbs (AT)

(56) Entgegenhaltungen:
- DE-A- 1 807 058
- DE-A- 3 915 771
- US-A- 4 132 317

## Beschreibung

Die Erfindung betrifft eine Maschine mit einem drehbar auf einem Maschinenrahmen gelagerten Auslegerkran und einer Schwenkvorrichtung mit einem Schwenkantrieb zum Verschwenken einer am Maschinenrahmen gelagerten Gegenlast, wobei der Maschinenrahmen durch Radaufstandspunkte aufweisende Spurkranzräder auf einem Gleis verfahrbar ist.

Durch die DE 39 15 771 A1 ist eine Gegenlastanordnung für Auslegerkräne bekannt, wobei zwei bezüglich der Maschinenquerrichtung voneinander distanzierte Gegenlasten vorgesehen sind. Jede Gegenlast ist auf einem Gegenlastarm befestigt, der schwenkbar am Maschinenrahmen gelagert ist. Damit ist jede Gegenlast von einer bezüglich des Auslegerkranes weiter distanzierten ersten Position in eine näher distanzierte zweite Position um 180° verschwenkbar. Eine Maschine gemäß dem Obergriff des Anspruchs 1 ist aus diesem Dokument bekannt.

Weiters ist gemäß EP 675 069 A1 eine Steuereinrichtung für die Antriebe eines Ausleger-Drehkranes bekannt. Anhand von Meßeinrichtungen werden laufend verschiedene Parameter des Kranes überwacht und ein daraus gebildeter Referenzmeßwert rechnerisch dem aktuellen Lastmoment gegenübergestellt. Bei Überschreiten von zulässigen Höchstgrenzen wird automatisch eine Überlastabschaltvorrichtung aktiviert.

Die Aufgabe der vorliegenden Erfindung liegt nun in der Schaffung einer Maschine der gattungsgemäßen Art, bei der eine Verletzung eines Lichtraumprofiles des Gleises durch die Gegenlast vermeidbar ist.

Diese Aufgabe wird erfindungsgemäß mit einer Maschine der gattungsgemäßen Art dadurch gelöst, daß die Schwenkvorrichtung eine parallel zur Maschinenlängsrichtung verlaufende, bezüglich der Maschinenquerrichtung außerhalb eines durch die Radaufstandspunkte begrenzten Bereiches befindliche Schwenkachse aufweist und für eine Verschwenkung der Gegenlast von einer Überstellposition - bei der ein Masseschwerpunkt der Gegenlast innerhalb des durch die bezüglich der Maschinenquerrichtung voneinander distanzierten Radaufstandspunkte definierten Bereiches positioniert ist - in eine Gegenlastposition ausgebildet ist, bei der der Masseschwerpunkt außerhalb des genannten Bereiches angeordnet ist.

Durch die spezielle Schwenkvorrichtung ist die gesamte Gegenlast mit einer maximalen Distanz zur Kippkante positionierbar, so daß unter Reduktion der Achslasten mit einer kleineren Masse für die Gegenlast das Auslangen gefunden werden kann. Außerdem ist durch eine vertikale Gegenlastposition eine Überschreitung des Lichtraumprofiles in vorteilhafter Weise ausgeschlossen. Mit der erfindungsgemäßen Ausbildung bleibt die erforderliche Standsicherheit der Maschine für sämtliche Arbeitsbewegungen des Kranes auch ohne Außenabstützung uneingeschränkt erhalten.

Vorteilhafte Weiterbildungen der Erfindung ergeben sich aus den Unteransprüchen und der Zeichnung.

Im folgenden wird die Erfindung anhand von in der Zeichnung dargestellten Ausführungsbeispielen näher erläutert.

Es zeigen:
Fig. 1 eine Seitenansicht einer Maschine mit einem Auslegerkran und einer erfindungsgemäß ausgebildeten Schwenkvorrichtung für eine Gegenlast,
Fig. 2 eine Schnittansicht der Maschine gemäß der Schnittlinie II in Fig. 1, und
Fig. 3 eine stark vereinfachte Schnittansicht einer weiteren Ausführungsform der Erfindung.

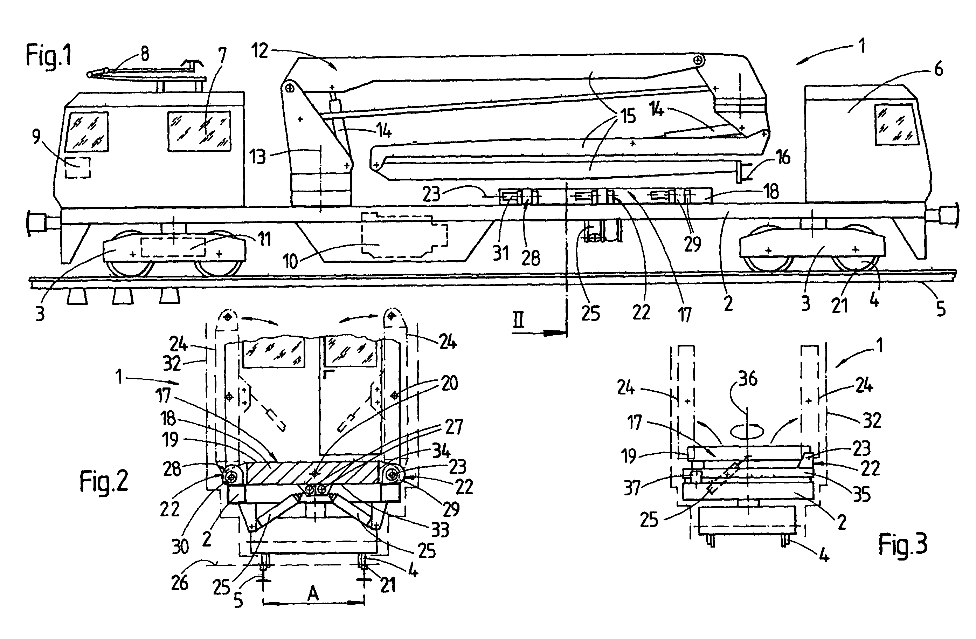

In Fig. 1 ist eine Maschine 1 mit einem Maschinenrahmen 2 dargestellt, der über Schienenfahrwerke 3 mit Spurkranzrädern 4 auf einem Gleis 5 verfahrbar ist. Der Maschinenrahmen 2 ist endseitig jeweils mit einer Fahr- bzw. Arbeitskabine 6,7 versehen, wobei die Kabine 7 mit einem Meßbügel 8 und einer zentralen Steuereinrichtung 9 ausgestattet ist. Ein Motor 10 ist für die Energieversorgung eines Fahrantriebes 11 sowie aller weiteren, noch zu beschreibenden Antriebe der Maschine 1 vorgesehen.

Auf dem Maschinenrahmen 2 ist ein Auslegerkran 12 befestigt, der um eine vertikale Achse 13 drehbar gelagert ist und über Antriebe 14 höhen- und seitenverstellbare Auslegerarme 15 aufweist. Am freien Ende des äußersten Auslegerarmes 15 befindet sich eine Halterung 16 zur wahlweisen Verbindung mit (nicht gezeigten) Arbeitswerkzeugen oder einem Arbeitskorb.

Am Maschinenrahmen 2 ist weiters zwischen den beiden Kabinen 6,7 im Bereich des Auslegerkranes 12 eine Gegenlast 17 gelagert. Wie nun auch aus Fig. 2 genauer ersichtlich, hat diese Gegenlast 17 die Form einer Platte 18, die bezüglich eines senkrecht zur Maschinenlängsrichtung verlaufenden Querschnitts eine Breitseite 33 und eine Schmalseite 34 aufweist und die in Ruhe- oder Überstellposition 19 der Gegenlast 17 (in vollen Linien dargestellt) mit der Breitseite 33 auf dem Maschinenrahmen 2 aufliegt. In dieser Position befindet sich ein Masseschwerpunkt 20 der Gegenlast 17 innerhalb eines Bereiches A, der durch in Maschinenquerrichtung voneinander distanzierte Radaufstandspunkte 21 der Spurkranzräder 4 definiert ist (Fig. 2).

An den beiden Längsseiten des Maschinenrahmens 2 ist jeweils eine Schwenkvorrichtung 22 angeordnet, die eine parallel zur Maschinenlängsrichtung verlaufende Schwenkachse 23 aufweist. Die beiden Schwenkvorrichtungen 22 dienen jeweils zur Verschwenkung der Gegenlast 17 um die genannte Schwenkachse 23 von der Überstellposition 19, in der die Platte 18 mit der Breitseite 33 parallel zu einer durch die Radaufstandspunkte 21 gebildeten Ebene 26 ausgerichtet ist, in eine Gegenlastposition 24, bei der die Breitseite senkrecht zur Ebene 26 verläuft. Die beiden möglichen Gegenlastpositionen 24 sind in Fig. 2 in strichpunktierten Linien angedeutet. Bei Einnehmen dieser Position befindet sich der Masseschwerpunkt 20 außerhalb des durch die Radaufstandspunkte 21 begrenzten Bereiches A. Zur Durchführung dieser Verschwenkung der - in der Überstellposition 19 zwischen den in Maschinenquerrichtung voneinander distanzierten Schwenkvorrichtungen 22 befindlichen - Gegenlast 17 ist jeder Schwenkvorrichtung 22 ein Schwenkantrieb 25 zugeordnet, der an der - der jeweiligen Schwenkvorrichtung 22 gegenüberliegenden - Längsseite des Maschinenrahmens 2 sowie an der Gegenlast 17 bzw. Platte 18 angelenkt ist. Zur Verbindung jedes der in Maschinenquerrichtung voneinander distanzierten Schwenkantriebe 25 mit der Gegenlast 17 ist je eine fernsteuerbare Kupplungseinrichtung 27 vorgesehen, die eine wahlweise Kupplung mit der Platte 18 ermöglicht.

Wie aus Fig. 1 deutlich wird, verläuft die Schwenkachse 23 jeder Schwenkvorrichtung 22 durch drei in Maschinenlängsrichtung voneinander distanzierte Anlenkstellen 28, anhand derer die Gegenlast 17 mit dem Maschinenrahmen 2 verschwenkbar verbindbar ist. Jede Anlenkstelle 28 besteht aus an der Gegenlast 17 und am Maschinenrahmen 2 befestigten Flanschen 29, die über eine in Maschinenlängsrichtung bzw. in Richtung der Schwenkachse 23 verlaufende Welle 30 verbunden sind. Mittels einer fernsteuerbaren Kupplungseinrichtung 31 ist jede Welle 30 in ihrer Längsrichtung verschiebbar bzw. aus den Flanschen 29 herausziehbar, um so die wahlweise Herstellung einer formschlüssigen Verbindung der Schwenkvorrichtung 22 bzw. des Maschinenrahmens 2 mit der Gegenlast 17 zu ermöglichen.

Im Arbeitseinsatz der Maschine 1 wird der Auslegerkran 12 beispielsweise mitsamt einem daran befestigten Arbeitskorb seitlich ausgeschwenkt, um etwa die Unterseite einer Gleisbrücke zu inspizieren. Um dem dadurch entstehenden seitlichen Kippmoment entgegenzuwirken, wird die Gegenlast 17 auf der der Kippkante gegenüberliegenden Maschinenlängsseite in die vertikale Gegenlastposition 24 hochgeschwenkt. Dazu werden die jeweiligen Kupplungseinrichtungen 31 anhand der Steuereinrichtung 9 aktiviert, um die Anlenkstellen 28 auf der Seite der Gegenlastposition 24 in Eingriff zu bringen und gleichzeitig die Anlenkstellen der in Maschinenquerrichtung gegenüberliegenden Schwenkvorrichtung 22 zu lösen. Die Kupplungseinrichtungen 27 der Schwenkantriebe 25 werden ebenfalls entsprechend beaufschlagt, um den jeweils für die Verschwenkung benötigten Schwenkantrieb 25 mit der Gegenlast 17 zu kuppeln und gleichzeitig den anderen Schwenkantrieb 25 von der Gegenlast 17 zu lösen bzw. zu entkuppeln. Danach kann das Hochschwenken der Gegenlast 17 in die Gegenlastposition 24 erfolgen, in der die Gegenlast 17 zur Gänze innerhalb eines (in strich-doppelpunktierten Linien dargestellten) Lichtraumprofiles 32 des Gleises 5 positioniert ist.

Die Beaufschlagung der Kupplungseinrichtungen 27 und 31 sowie des Schwenkantriebes 25 kann manuell oder vollautomatisch eingeleitet werden. In letzterem Fall kann die Steuereinrichtung 9 z.B. so ausgebildet sein, daß bei Erreichen eines bestimmten, durch die seitliche Verschwenkung des Auslegerkranes 12 verursachten Lastmomentes der Kran 12 automatisch gestoppt wird, um die Gefahr eines Kippens der Maschine 1 zu vermeiden. Sodann wird die Gegenlast 17 automatisch in die erforderliche Gegenlastposition 24 auf der dem Kran gegenüberliegenden Maschinenlängsseite gebracht und danach die Verschwenkung des Kranes 12 fortgesetzt.

Es wäre weiters denkbar, auf die Kupplungseinrichtungen 27 überhaupt zu verzichten und statt dessen beide Schwenkantriebe 25 permanent mit der Gegenlast 17 verbunden zu lassen, wobei dann während der Verschwenkung der jeweils nicht in Betrieb befindliche Schwenkantrieb 25 einfach schwimmend geschaltet würde. Ebenso kann jede Schwenkvorrichtung 22 mehrere, parallel zueinander beaufschlagbare Schwenkantriebe 25 aufweisen.

Fig. 3 zeigt ein weiteres Beispiel einer erfindungsgemäßen Ausbildung, bei dem der Einfachheit halber funktionsgleiche Teile mit denselben Bezugszeichen wie bei Fig. 1 und 2 versehen sind. Bei dieser (lediglich schematisch dargestellten) Variante ist nur eine einzige Schwenkvorrichtung 22 vorgesehen, mit der eine Gegenlast 17 wahlweise von der Überstellposition 19 in die beiden möglichen, an den beiden Längsseiten des Maschinenrahmens 2 befindlichen Gegenlastpositionen 24 verbringbar ist. Zu diesem Zweck ist die Gegenlast 17 mitsamt der - die Schwenkachse 23 und den Schwenkantrieb 25 aufweisenden - Schwenkvorrichtung 22 auf einem Tragrahmen 35 angeordnet. Dieser ist seinerseits auf dem Maschinenrahmen 2 um eine vertikale Achse 36 in einem Winkel von 180° verdrehbar gelagert. Diese drehtellerartige Ausbildung ermöglicht es auf einfache Weise, die Gegenlast 17 nach entsprechender horizontaler Rotation des Tragrahmens 35 anhand eines Drehantriebes 37 auf der - der jeweiligen Kippkante in Maschinenquerrichtung gegenüberliegenden - Maschinenlängsseite in die innerhalb des Lichtraumprofiles 32 liegende, vertikale Gegenlastposition 24 hochzuschwenken.

Als Alternativlösung zu der in Fig. 3 gezeigten Variante wäre es möglich, nur die Schwenkvorrichtung 22 (nicht jedoch die Gegenlast 17) um die vertikale Achse 36 in einem Winkel von 180° drehbar auszubilden, um sie von einer ersten Arbeitsposition zum Erfassen der Gegenlast 17 an der einen Maschinenlängsseite in eine zweite Arbeitsposition zum Erfassen der Gegenlast 17 auf der gegenüberliegenden Längsseite der Maschine 1 zu verschwenken.

## Patentansprüche

1. Maschine (1) mit einem drehbar auf einem Maschinenrahmen (2) gelagerten Auslegerkran (12) und einer Schwenkvorrichtung (22) mit einem Schwenkantrieb (25) zum Verschwenken einer am Maschinenrahmen (2) gelagerten Gegenlast (17), wobei der Maschinenrahmen (2) durch Radaufstandspunkte (21) aufweisende Spurkranzräder (4) auf einem Gleis (5) verfahrbar ist, **dadurch gekennzeichnet, daß** die Schwenkvorrichtung (22) eine parallel zur Maschinenlängsrichtung verlaufende, bezüglich der Maschinenquerrichtung außerhalb eines durch die Radaufstandspunkte (21) begrenzten Bereiches (A) befindliche Schwenkachse (23) aufweist und für eine Verschwenkung der Gegenlast (17) von einer Überstellposition (19) - bei der ein Masseschwerpunkt (20) der Gegenlast (17) innerhalb des durch die bezüglich der Maschinenquerrichtung voneinander distanzierten Radaufstandspunkte (21) definierten Bereiches (A) positioniert ist - in eine Gegenlastposition (24) ausgebildet ist, bei der der Masseschwerpunkt (20) außerhalb des genannten Bereiches (A) angeordnet ist.

2. Maschine nach Anspruch 1, **dadurch gekennzeichnet, daß** die Gegenlast (17) als Platte (18) mit - bezüglich eines senkrecht zur Maschinenlängsrichtung bzw. Schwenkachse (23) verlaufenden Querschnitts -einer Breitseite (33) und einer Schmalseite (34) ausgebildet ist.

3. Maschine nach Anspruch 2, **dadurch gekennzeichnet, daß** die Breitseite (33) der Platte (18) in der Überstellposition (19) der Gegenlast (17) parallel zu einer durch die Radaufstandspunkte (21) gebildeten Ebene (26) ausgerichtet ist, während in der Gegenlastposition (24) die Breitseite (33) senkrecht zur genannten Ebene (26) verläuft.

4. Maschine nach einem der Ansprüche 1 bis 3, **gekennzeichnet durch** zwei bezüglich der Maschinenquerrichtung voneinander distanzierte Schwenkvorrichtungen (22), zwischen denen die in der Überstellposition (19) befindliche Gegenlast (17) angeordnet ist.

5. Maschine nach Anspruch 4, **dadurch gekennzeichnet, daß** jeder Schwenkvorrichtung (22) fernsteuerbare Kupplungseinrichtungen (27,31) zur wahlweisen Herstellung einer formschlüssigen Verbindung mit der Gegenlast (17) zugeordnet sind.

6. Maschine nach Anspruch 4 oder 5, **dadurch gekennzeichnet, daß** wenigstens zwei in Maschinenquerrichtung voneinander distanzierte Schwenkantriebe (25) mit jeweils einer fernsteuerbaren Kupplungseinrichtung (27) zur wahlweisen Kupplung mit der Gegenlast (17) vorgesehen sind.

7. Maschine nach einem der Ansprüche 1 bis 3, **dadurch gekennzeichnet, daß** die Schwenkvorrichtung (22) von einer ersten Arbeitsposition zum Erfassen der Gegenlast (17) um eine vertikale Achse (36) in einem Winkel von 180° in eine zweite Arbeitsposition zum Erfassen der Gegenlast (17) verschwenkbar ausgebildet ist.

## Claims

1. A machine (1), comprising a jib crane (12) rotatably mounted on a machine frame (2) and a pivoting device (22) having a pivot drive (25) for pivoting a counterweight (17) supported on the machine frame (2), the machine frame (2) being mobile on a track (5) by means of flanged wheels (4) having wheel contact points (21), **characterized in that** the pivoting device (22) has a pivot axis (23), extending parallel to the longitudinal direction of the machine and situated, with regard to the transverse direction of the machine, outside of a region (A) defined by the wheel contact points (21), and is designed for pivoting the counterweight (17) from a transfer position (19) - in which a mass center of gravity (20) of the counterweight (17) is positioned within the region (A) defined by the wheel contact points (21) spaced from one another with respect to the transverse direction of the machine - into a counterweight position (24) in which the mass center of gravity (20) is situated outside of said region (A).

2. A machine according to claim 1, **characterized in that** the counterweight (17) is designed as a plate (18) having a wide side (33) and a narrow side (34) with regard to a cross-section extending perpendicularly to the longitudinal direction of the machine or to the pivot axis (23).

3. A machine according to claim 2, **characterized in that**, in the transfer position (19) of the counterweight (17), the wide side (33) of the plate (18) is aligned parallel to a plane (26) formed by the wheel contact points (21), while in the counterweight position (24) the wide side (33) extends perpendicularly to the said plane (26).

4. A machine according to one of claims 1 to 3, **characterized by** two pivoting devices (22), spaced from one another with regard to the transverse direction of the machine, between which the counterweight (17) is arranged when situated in the transfer position (19).

5. A machine according to claim 4, **characterized in that** associated with each pivoting device (22) are remote-controllable coupling devices (27,31) for selectively establishing a form-fitting connection with the counterweight (17).

6. A machine according to claim 4 or 5, **characterized in that** at least two pivot drives (25) are provided, spaced from one another in the transverse direction of the machine, each having a remote-controllable coupling device (27) for selective coupling with the counterweight (17).

7. A machine according to one of claims 1 to 3, **characterized in that** the pivoting device (22) is designed for pivoting about a vertical axis (36) through an angle of 180° from a first operating position for engaging the counterweight (17) into a second operating position for engaging the counterweight (17) .

## Revendications

1. Machine (1) présentant une grue à flèche (12) positionnée sur un châssis de machine (2) de façon à pouvoir pivoter, et un dispositif de pivotement (22) comportant un mécanisme de commande de pivotement (25) destiné à faire pivoter une charge d'équilibrage (17) positionnée sur un châssis de machine (2), celui-ci pouvant être déplacé sur une voie (5) au moyen de roues à boudin (4) présentant des points d'appui de roue (21), **caractérisée en ce que** le dispositif de pivotement (22) présente un axe de pivotement (23) se trouvant par rapport au sens transversal de la machine en dehors d'une zone (A) délimitée par les points d'appui de roue (21) et s'étendant parallèlement au sens longitudinal de la machine, et est conçu pour faire pivoter la charge d'équilibrage (17) d'une position de transfert (19) - dans laquelle un centre de gravité de masse (20) de la charge d'équilibrage (17) est positionné à l'intérieur de la zone (A) définie par les points d'appui de roue (21) se trouvant à distance les uns des autres par rapport au sens transversal de la machine - dans une position de charge d'équilibrage (24) dans laquelle le centre de gravité de masse (20) est disposé en dehors de ladite zone (A).

2. Machine selon la revendication 1, **caractérisée en ce que** la charge d'équilibrage (17) est configurée comme une plaque (18) présentant - par rapport à une section transversale s'étendant perpendiculairement au sens longitudinal de la machine ou, selon le cas, à l'axe de pivotement (23) - un côté large (33) et un côté étroit (34).

3. Machine selon la revendication 2, **caractérisée en ce que** le côté large (33) de la plaque (18) est orienté, dans la position de transfert (19) de la charge d'équilibrage (17), parallèlement à un plan formé par les points d'appui de roue (21), alors que dans la position de charge d'équilibrage (24) le côté large (33) s'étend perpendiculairement audit plan (26).

4. Machine selon l'une quelconque des revendications 1 à 3, **caractérisée par** deux dispositifs de pivotement (22) situés à distance l'un de l'autre par rapport au sens transversal de la machine et entre lesquels la charge d'équilibrage (17) se trouvant dans la position de transfert (19) est disposée.

5. Machine selon la revendication 4, **caractérisée en ce qu'**à chaque dispositif de pivotement (22), des équipements de couplage (27,31) pouvant être commandés à distance sont associés afin de réaliser au choix une liaison par forme à la charge d'équilibrage (17).

6. Machine selon la revendication 4 ou 5, **caractérisée en ce qu'**au moins deux mécanismes de commande de pivotement (25) situés à distance l'un de l'autre dans le sens transversal de la machine, sont chacun pourvus d'un équipement de couplage (27) pouvant être commandé à distance pour un couplage au choix à la charge d'équilibrage (17).

7. Machine selon l'une quelconque des revendications 1 à 3, **caractérisée en ce que** le dispositif de pivotement (22) est conçu de façon à pouvoir pivoter d'une première position de fonctionnement destinée à saisir la charge d'équilibrage (17), autour d'un axe vertical (36) sur un angle de 180° dans une deuxième position de fonctionnement destinée à saisir la charge d'équilibrage (17).
